# EUROPÄISCHE PATENTSCHRIFT

(11) **EP 3 649 316 B1**
(45) Veröffentlichungstag und Bekanntmachung des Hinweises auf die Patenterteilung: **07.06.2023**
(21) Anmeldenummer: 18750307.3
(22) Anmeldetag: 22.06.2018
(51) Int. Cl.: E06C 9/04, F16B 13/08, E02D 29/12, F16B 21/08

(54) **VORRICHTUNG ZUM BEFESTIGEN EINES STEIGBÜGELS IN EINER BETONWAND**
DEVICE FOR SECURING A RUNG IN A CONCRETE WALL
DISPOSITIF POUR FIXER UN ÉTRIER DANS UN MUR EN BÉTON

(30) Priorität: 06.07.2017 AT 505622017
(43) Veröffentlichungstag der Anmeldung: 13.05.2020
(73) Patentinhaber: Schlüsselbauer, Ulrich, 4674 Altenhof am Hausruck (AT)
(72) Erfinder: Schlüsselbauer, Ulrich, 4674 Altenhof am Hausruck (AT)
(74) Vertreter: Hübscher & Partner Patentanwälte GmbH
(86) Internationale Anmeldenummer: PCT/AT2018/050015
(87) Internationale Veröffentlichungsnummer: WO 2019/006480

(56) Entgegenhaltungen:
- EP-A2- 2 362 107
- US-A- 3 374 859
- US-A1- 2013 192 038

## Beschreibung

### Technisches Gebiet

Die Erfindung bezieht sich auf eine Vorrichtung zum Befestigen eines Steigbügels in einer Betonwand mit zwei in der Betonwand vorgesehenen, zwei parallele Ankerbolzen des U-förmigen Steigbügels formschlüssig aufnehmenden Ankerhülsen.

### Stand der Technik

Um beispielsweise Betonschächte nachträglich mit Steigbügeln versehen zu können, ist es bekannt, in der Schachtwand paarweise Ankerhülsen zur Aufnahme der gegen die Schachtwand vorstehenden, parallelen Ankerbolzen der U-förmigen Steigbügel vorzusehen, die im Bedarfsfall mit den Ankerbolzen voran in die vormontierten Ankerhülsen der Schachtwand eingeschlagen werden. Damit einerseits der erforderliche Ausziehwiderstand der Ankerbolzen aus den Ankerhülsen in der Schachtwand sichergestellt werden kann und anderseits eine vergleichsweise einfache Möglichkeit geschaffen wird, beschädigte Steigbügel austauschen zu können, wurde bereits vorgeschlagen (AT 392 663 B), die Ankerbolzen mit einem Schraubgewinde zu profilieren, das beim Einschlagen der Ankerbolzen in die Ankerhülsen aus Kunststoff im Bereich der Ankerhülse eine Materialverdrängung in die Gänge des Schraubgewindes bedingt, wodurch ein hoher Ausziehwiderstand erreicht werden kann. Zum Auswechseln eines Steigbügels wird der Trittsteg durchtrennt, sodass die beiden Ankerbolzen je für sich um ihre Achse gedreht werden können, was aufgrund des Schraubgewindes ein Herausschrauben der Ankerbolzen aus den Ankerhülsen ermöglicht. Nachteilig ist allerdings, dass zum Einschlagen der Ankerbolzen in die Ankerhülsen die Trittbügel großen Stoßbelastungen ausgesetzt werden, weil ja zur Sicherstellung des erforderlichen Ausziehwiderstands beim Einschlagen des Gewindeabschnitts der Ankerbolzen in die Ankerhülsen deren Kunststoff plastisch verformt werden muss. Damit besteht die Gefahr einer mechanischen Beschädigung der Trittbügel, wobei häufig vorgesehene Kunststoffbeschichtungen der Trittstege besonders gefährdet sind.

US 3 374 859 A offenbart eine Vorrichtung zum Befestigen eines Steigbügels gemäß dem Oberbegriff des Anspruchs 1.

### Darstellung der Erfindung

Der Erfindung liegt somit die Aufgabe zugrunde, eine Vorrichtung zum Befestigen von Steigbügeln in einer Betonwand so auszugestalten, dass unter Wahrung eines sicheren Halts der Steigbügel in der Betonwand bei der Montage nur vergleichsweise geringe Kräfte auf die Steigbügel aufzubringen sind, ohne eine einfache Austauschbarkeit zu gefährden.

Ausgehend von einer Vorrichtung der eingangs geschilderten Art löst die Erfindung die gestellte Aufgabe dadurch, dass zwischen den einerseits durch die Ankerhülsen und anderseits durch die Ankerbolzen gebildeten Kupplungsteilen eine Rasteinrichtung aus wenigstens einer in radialer Richtung federnden Rastzunge an einem dieser Kupplungsteile und aus einer die Rastzunge aufnehmenden Rastausnehmung am anderen Kupplungsteil vorgesehen ist und dass an die Rastausnehmung zumindest in einer Umfangsrichtung eine in Umfangsrichtung geneigte, sich in radialer Richtung über die Eingriffstiefe der Rastzunge erstreckende Anlauffläche für die Rastzunge anschließt.

Da zwischen den in der Betonwand vorgesehenen Ankerhülsen und den in die Ankerhülsen eingreifenden Ankerbolzen der Steigbügel eine Rasteinrichtung mit einer in radialer Richtung federnden Rastzunge und einer die Rastzunge aufnehmenden Rastausnehmung vorgesehen ist, wird der Ausziehwiderstand der Ankerbolzen aus den Ankerhülsen konstruktiv durch die Rasteinrichtung vorgegeben, die ja einen in Ausziehrichtung wirksamen, axialen Anschlag für die diesen Anschlag hintergreifende Rastzunge bildet, sodass durch den Anschlag der Rastausnehmung eine wirksame Ausziehsicherung erreicht wird, die nur dann überwunden werden kann wenn die Rastzunge zerstört wird. Die zum Einführen der Ankerbolzen in die Ankerhülsen benötigte Kraft wird dabei im Wesentlichen von der Kraft bestimmt, die zum radialen Verlagern der Rastzunge gegen deren Federkraft erforderlich und daher unabhängig von einem vorgegebenen Ausziehwiderstand ist. Es ist lediglich dafür zu sorgen, dass die Rastzunge beim Einführen der Ankerbolzen in die Ankerhülsen ausreichend weit gegen den sie aufnehmenden Kupplungsteil radial verlagert werden kann, um entlang der Wandung des Kupplungsteils mit der Rastausnehmung bis zur Rastausnehmung gleiten zu können.

Trotz der ein Ausziehen der Ankerbolzen aus den Ankerhülsen sperrenden Rasteinrichtung wird ein einfaches Auswechseln der Steigbügel ermöglicht, weil die Rastausnehmung zumindest in einer Umfangsrichtung in einer in Umfangsrichtung geneigten, sich in radialer Richtung über die Eingriffstiefe der Rastzunge erstreckenden Anlauffläche für die Rastzunge ausläuft. Dies bedeutet, dass nach einem Durchtrennen des Trittstegs des Steigbügels die Ankerbolzen um ihre Achse in Richtung der Anlauffläche mit der Wirkung gedreht werden können, dass die Rastzunge in Umfangsrichtung aus der Rastausnehmung bewegt und dabei entlang der Anlauffläche gegen ihre Federkraft radial gegen den zugehörigen Kupplungsteil verlagert wird, um dann bei gelöster Rasteinrichtung den Ankerbolzen aus der Ankerhülse herausziehen zu können.

Bildet die Rastausnehmung eine sich über einen Umfangsbereich des zugehörigen Kupplungsteils erstreckende Nut, die an zumindest einer Stirnseite mit einer Anlauffläche für die Rastzunge abschließt, so ergeben sich besonders einfache Konstruktionsbedingungen. Die sich über einen Umfangsbereich erstreckende Nut formt nicht nur mit einer Nutwand einen axialen Anschlag für die Rastzunge, sondern führt die Rastzunge auch in Umfangsrichtung zur in Umfangsrichtung geneigten Anlauffläche, entlang der die Rastzunge seitlich aus der Rastausnehmung bewegt wird.

### Gemäß der Erfindung ist

die wenigstens eine federnde Rastzunge an einem in eine Umfangsnut des zugehörigen Kupplungsteils drehfest eingesetzten, offenen Federring vorgesehen, weil in diesem Fall unter anderem die Werkstoffeigenschaften der federnden Rastzunge unabhängig von den Werkstoffeigenschaften des zugehörigen Kupplungsteils gewählt werden können. Es ist jedoch dafür zu sorgen, dass der aufgrund seiner Federeigenschaften einfach in die Umfangsnut einsetzbare Federring drehfest gegenüber dem zugehörigen Kupplungsteil abgestützt wird, weil sonst eine Relativdrehung zwischen der Rastzunge und der Rastausnehmung zum Lösen der Rasteinrichtung nicht sichergestellt werden könnte. Zur Drehsicherung kann die Umfangsnut durch einen Axialsteg unterbrochen sein, der einen stirnseitigen Anschlag für die beiden Enden des offenen Federrings bildet.

Zur besseren axialen Abstützung der Ankerbolzen in den Ankerhülsen können die Federringe zwei einander diametral gegenüberliegende, je in eine Rastausnehmung eingreifende Rastzungen aufweisen, sodass sich die axialen Stützkräfte auf die beiden Federzungen aufteilen.

Obwohl es für die Wirkung der Rasteinrichtung unerheblich ist, welcher der beiden Kupplungsteile mit der Rastzunge oder der Rastausnehmung versehen ist, muss einer Ausführungsform der Vorzug gegeben werden, bei der die Rastzungen den Ankerbolzen und die Rastausnehmung den Ankerhülsen zugeordnet sind.

### Kurze Beschreibung der Erfindung

In der Zeichnung ist der Erfindungsgegenstand beispielsweise dargestellt. Es zeigen
- Fig. 1: einen in einer Betonwand mithilfe einer erfindungsgemäßen Vorrichtung befestigten Steigbügel in einem Schnitt durch die Ankerhülsen,
- Fig. 2: eine Ankerhülse mit eingesetztem Ankerbolzen in einem Axialschnitt in einem größeren Maßstab und
- Fig. 3: einen Schnitt nach der Linie III-III der Fig. 2.

### Weg zur Ausführung der Erfindung

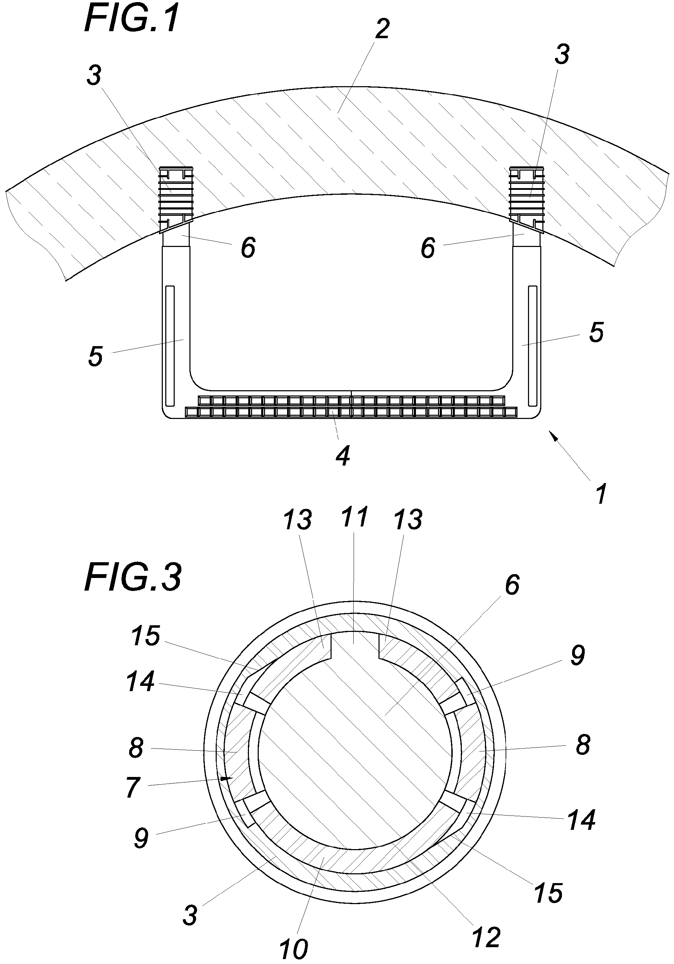

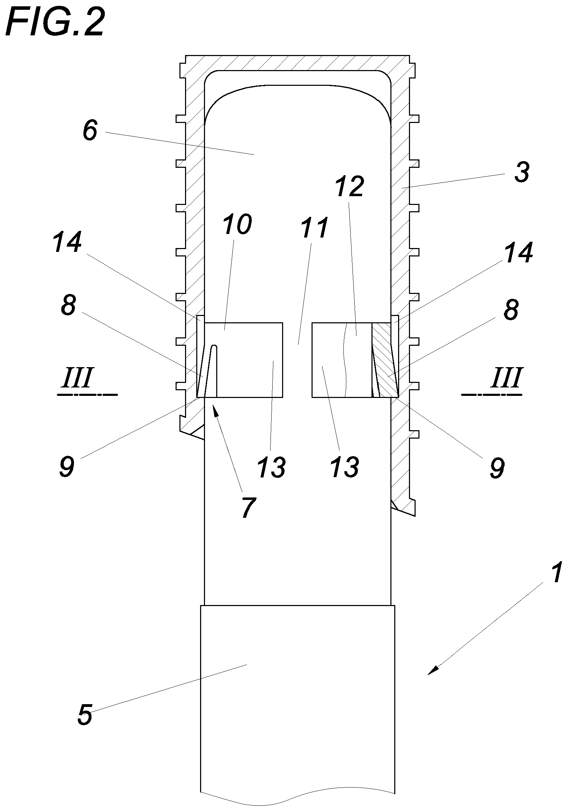

Wie sich aus der Fig. 1 ergibt, sind zur nachträglichen Befestigung eines Steigbügels 1 in einer Betonwand 2, beispielsweise eines Schachtrings, für jeden Steigbügel 1 zwei Ankerhülsen 3 eingegossen, in die der Steigbügel 1 eingeführt wird. Der U-förmige Steigbügel 1, der einen Trittsteg 4 mit zwei abstehenden Schenkeln 5 bildet, weist an den Schenkelenden zwei parallele Ankerbolzen 6 zur Verankerung in den Ankerhülsen 3 auf. Diese Verankerung erfolgt über eine Rasteinrichtung 7 zwischen der Ankerhülse 3 und dem in die Ankerhülse 3 eingreifenden Ankerbolzen 6. Die Rasteinrichtung 7 umfasst entsprechend den Fig. 2 und 3 zwei einander diametral gegenüberliegende, federnde Rastzungen 8, die in Rastausnehmungen 9 federnd einrasten. Obwohl vorzugsweise die Rastzungen 8 den Ankerbolzen 6 und die Rastausnehmungen 9 den Ankerhülsen 3 zugeordnet sind, ist dies nicht zwingend, weil in einer kinematischen Umkehr die Rastzungen 8 und die Rastausnehmungen 9 auch dem jeweils anderen dieser Kupplungsteile zugehören können.

Um einfache Konstruktionsvoraussetzungen zu schaffen, sind die Rastzungen 8 an einem von den Ankerbolzen 6 gesonderten, offenen Federring 10 vorgesehen, der in eine durch einen Axialsteg 11 unterbrochene Umfangsnut 12 des Ankerbolzens 6 eingesetzt ist und sich mit seinen stirnseitigen Enden 13 am Axialsteg 11 gegen ein Drehen in Umfangsrichtung abstützt. Die Rastausnehmungen 9 für die Rastzungen 8 werden durch sich über einen beschränkten Umfangsbereich der Kupplungshülse 3 erstreckende Nuten 14 gebildet, an die an einer Stirnseite eine in Umfangsrichtung ansteigende Anlauffläche 15 für die Rastzunge 8 anschließt. Da sich der Anstieg der Anlauffläche 15 über die Nuttiefe erstreckt, werden bei einer Drehung des Ankerbolzens 6 in Richtung des Anstiegs der Anlaufflächen 15 die Rastzungen 8 gegen ihre Federkraft entlang der Anlaufflächen 15 aus den Nuten 14 radial einwärts gegen den Federring 10 verschwenkt, sodass die Ankerbolzen 6 dann bei gelöster Rasteinrichtung 7 aus den Ankerhülsen 3 gezogen werden können. Zu diesem Zweck muss allerdings vorher der Trittsteg 4 durchtrennt werden, damit die Ankerbolzen 6 über den verbleibenden Trittstegabschnitt in der Ankerhülse 3 gedreht werden können.

Zum Einsetzen eines Steigbügels 1 in die Ankerhülsen 3 brauchen die Ankerbolzen 6 mit den drehfest eingesetzten Federringen 10 lediglich in die Ankerbolzen 6 eingeführt zu werden, bis die beim Einführen gegen die Ankerbolzen eingeschwenkten Rastzungen 8 in die Rastausnehmungen 9 federnd einrasten und damit die Ankerbolzen 6 gegen ein axiales Herausziehen in den Ankerhülsen 3 verriegeln.

## Patentansprüche

1. Vorrichtung zum Befestigen eines Steigbügels (1) in einer Betonwand (2) mit zwei in der Betonwand (2) vorgesehenen, zwei parallele Ankerbolzen (6) des U-förmigen Steigbügels (1) formschlüssig aufnehmenden Ankerhülsen (3) und mit einer zwischen den einerseits durch die Ankerhülsen (3) und anderseits durch die Ankerbolzen (6) gebildeten Kupplungsteilen vorgesehenen Rasteinrichtung (7) aus wenigstens einer in radialer Richtung federnden Rastzunge (8) an einem dieser Kupplungsteile (3, 6) und aus einer die Rastzunge (8) aufnehmenden Rastausnehmung (9) am anderen Kupplungsteil (6, 3), an die zumindest in einer Umfangsrichtung eine in Umfangsrichtung geneigte, sich in radialer Richtung über die Eingriffstiefe der Rastzunge (8) erstreckende Anlauffläche (15) für die Rastzunge (8) anschließt, **dadurch gekennzeichnet, dass** die wenigstens eine federnde Rastzunge (8) an einem in eine Umfangsnut (12) des zugehörigen Kupplungsteils (6) drehfest eingesetzten, offenen Federring (10) vorgesehen ist.

2. Vorrichtung nach Anspruch 1, **dadurch gekennzeichnet, dass** die Rastausnehmung (9) eine sich über einen Umfangsbereich des zugehörigen Kupplungsteils (3) erstreckende Nut (14) bildet, die an zumindest einer Stirnseite mit der Anlauffläche (15) für die Rastzunge abschließt.

3. Vorrichtung nach Anspruch 1 oder 2, **dadurch gekennzeichnet, dass** die Umfangsnut (12) durch einen Axialsteg (11) unterbrochen ist, der einen stirnseitigen Anschlag für die beiden Enden (13) des offenen Federrings (10) bildet.

4. Vorrichtung nach einem der Ansprüche 1 bis 3, **dadurch gekennzeichnet, dass** der offene Federring (10) zwei einander diametral gegenüberliegende, je in eine Rastausnehmung (9) eingreifende Rastzungen (8) aufweist.

5. Vorrichtung nach einem der Ansprüche 1 bis 4, **dadurch gekennzeichnet, dass** die Rastzungen (8) den Ankerbolzen (6) und die Rastausnehmung (9) den Ankerhülsen (3) zugeordnet sind.

## Claims

1. Device for securing a step iron (1) in a concrete wall (2), comprising two anchor sleeves (3) which are provided in the concrete wall (2) and receive two parallel anchor bolts (6) of the U-shaped step iron (1) in a form-fitting manner, and comprising a latching device (7) which is provided between the coupling parts formed on the one hand by the anchor sleeves (3) and on the other hand by the anchor bolts (6) and consists of at least one latching tongue (8), which is resilient in the radial direction, on one of these coupling parts (3, 6) and of a latching recess (9), which receives the latching tongue (8), on the other coupling part (6, 3), and a run-on surface (15) for the latching tongue (8) adjoins the latching recess at least in a circumferential direction, said run-on surface being inclined in the circumferential direction and extending in the radial direction over the engagement depth of the latching tongue (8), **characterised in that** the at least one resilient latching tongue (8) is provided on an open spring ring (10) which is inserted for conjoint rotation into a circumferential groove (12) of the associated coupling part (6).

2. Device as claimed in claim 1, **characterised in that** the latching recess (9) forms a groove (14) which extends over a circumferential region of the associated coupling part (3) and terminates at at least one end face with the run-on surface (15) for the latching tongue.

3. Device as claimed in claim 1 or 2, **characterised in that** the circumferential groove (12) is interrupted by an axial bar (11) which forms an end-face stop for the two ends (13) of the open spring ring (10).

4. Device as claimed in any one of claims 1 to 3, **characterised in that** the open spring ring (10) has two latching tongues (8) which are diametrically opposed to one another and which each engage into a latching recess (9).

5. Device as claimed in any one of claims 1 to 4, **characterised in that** the latching tongues (8) are associated with the anchor bolts (6) and the latching recess (9) is associated with the anchor sleeves (3).

## Revendications

1. Dispositif de fixation d'un étrier (1) dans un mur en béton (2), comprenant deux douilles d'ancrage (3) prévues dans le mur en béton (2) et destinées à recevoir par complémentarité de forme deux boulons d'ancrage parallèles (6) de l'étrier en forme de U (1), comprenant un dispositif d'encliquetage (7) prévu entre les éléments d'accouplement formés d'une part par les douilles d'ancrage (3) et d'autre part par les boulons d'ancrage (6), comprenant au moins une languette d'encliquetage élastique (8) dans la direction radiale sur l'un desdits éléments d'accouplement (3, 6), et comportant un évidement d'encliquetage (9) qui est destiné à recevoir la languette d'encliquetage (8) sur l'autre élément d'accouplement (6, 3) et auquel se raccorde, au moins dans une direction périphérique, une surface de butée (15) prévue pour la languette d'encliquetage (8) qui est inclinée dans la direction périphérique et qui s'étend dans la direction radiale sur la profondeur d'engagement de la languette d'encliquetage (8), **caractérisé en ce que** ladite au moins une languette d'encliquetage élastique (8) est prévue sur une rondelle élastique ouverte (10) qui est insérée de façon solidaire en rotation à l'intérieur d'une rainure périphérique (12) de l'élément d'accouplement (6) correspondant.

2. Dispositif selon la revendication 1, **caractérisé en ce que** l'évidement d'encliquetage (9) forme une rainure (14) qui s'étend sur une région périphérique de l'élément d'accouplement (3) associé, et qui se termine sur au moins une face frontale par la surface de butée (15) prévue pour la languette d'encliquetage.

3. Dispositif selon la revendication 1 ou 2, **caractérisé en ce que** la rainure périphérique (12) est interrompue par une nervure axiale (11) qui forme une butée frontale pour les deux extrémités (13) de la rondelle élastique ouverte (10).

4. Dispositif selon l'une quelconque des revendications 1 à 3, **caractérisé en ce que** la rondelle élastique ouverte (10) présente deux languettes d'encliquetage (8) diamétralement opposées et qui s'engagent chacune à l'intérieur d'un évidement d'encliquetage (9).

5. Dispositif selon l'une quelconque des revendications 1 à 4, **caractérisé en ce que** les languettes d'encliquetage (8) sont associées aux boulons d'ancrage (6), alors que l'évidement d'encliquetage (9) est associé aux douilles d'ancrage (3).
